# EUROPÄISCHE PATENTSCHRIFT

(11) **EP 3 044 855 B1**
(45) Veröffentlichungstag und Bekanntmachung des Hinweises auf die Patenterteilung: **10.10.2018**
(21) Anmeldenummer: 14766103.7
(22) Anmeldetag: 05.08.2014
(51) Int. Cl.: B23B 31/26, B23B 31/28, H02K 7/06, H02K 1/22, H02K 7/00, H02K 5/173, H02K 7/08, H02K 7/116

(54) **LINEARAKTUATOR**
LINEAR ACTUATOR
ACTIONNEUR LINÉAIRE

(30) Priorität: 11.09.2013 DE 102013014935; 07.11.2013 DE 102013222649
(43) Veröffentlichungstag der Anmeldung: 20.07.2016
(73) Patentinhaber: Schaeffler Technologies AG & Co. KG, 91074 Herzogenaurach (DE)
(72) Erfinder: RUDY, Dietmar, 66501 Kleinbundenbach (DE)
(86) Internationale Anmeldenummer: PCT/DE2014/200381
(87) Internationale Veröffentlichungsnummer: WO 2015/035989

(56) Entgegenhaltungen:
- WO-A1-2013/118319
- DE-A1- 19 747 074
- DE-A1-102007 014 714
- US-A- 5 140 739
- US-A1- 2004 007 923

## Beschreibung

Die Erfindung betrifft einen Linearaktuator, umfassend einen Elektromotor mit einem Stator und einem Rotor sowie einen Gewindetrieb mit einer Spindel und einer über Wälzkörper auf der Spindel geführten Mutter, die mit dem Rotor gekoppelt ist.

Linearaktuatoren werden zur Durchführung von linearen Stellaufgaben eingesetzt. Ein Beispiel, das jedoch nicht beschränkend ist, ist die Verwendung in einer Werkzeugmaschine als Löseeinheit einer Werkzeugaufnahme, in welcher das Werkzeug austauschbar fixiert werden kann.

Linearaktuatoren sind in unterschiedlichen Bauformen bekannt, beispielhaft sei auf DE 20 2009 015 840 U1 verwiesen. Dort ist ein Linearaktuator beschrieben, der ebenfalls der Betätigung einer Werkzeugaufnahme dient. Der Linearaktuator umfasst einen Elektromotor mit Stator und Rotor, wobei mit dem Rotor eine Gewindespindel gekoppelt ist, mithin also über den Rotor gedreht wird. Die Gewindespindel ist Teil eines Gewindetriebs, der dort als Planetenwälzgetriebe ausgeführt ist. Dieser Gewindetrieb umfasst ferner eine Mutter, die über diesen Gewindetrieb axial bewegt werden kann, wobei die Mutter über entsprechende Verdrehsicherungen verdrehgesichert ist. Mit der Mutter gekoppelt ist eine axial bewegliche Kolbenstange, die zur Werkzeughalterung führt.

Die Spindel ist einerseits über den Gewindetrieb, hier also das Planetenwälzgetriebe gelagert, andererseits, also jenseits des Rotors, sind mehrere Schrägkugellager vorgesehen, die der Radial- und der Axiallagerung dienen. Der Aufbau dieses Linearaktuators ist jedoch sehr komplex, insbesondere bauraumintensiv.

Aus DE 19747074 A1 war ein Linearaktor nach den Merkmalen des Oberbegriffs des Anspruchs 1 bekannt geworden. Aufgrund der Anordnung des Elektromotors und des daran angeschlossenen Planetenwälzgetriebes in dem Gehäuse ergeben sich strukturelle Besonderheiten, die einen erheblichen Bauraum in axialer Richtung erfordern.

Der Erfindung liegt das Problem zugrunde, einen Linearaktuator anzugeben, der demgegenüber verbessert ist.

Zur Lösung dieses Problems ist erfindungsgemäß ein Linearaktuator gemäß Anspruch 1 vorgesehen, umfassend einen Elektromotor mit einem Stator und einem Rotor sowie einen Gewindetrieb mit einer Spindel und einer über Wälzkörper auf der Spindel geführten Mutter, die mit dem Rotor gekoppelt ist, wobei die Mutter über ein Planetenwälzlager an einem Gehäusebauteil drehgelagert ist.

Beim erfindungsgemäßen Linearaktuator ist zum einen die Mutter, die Teil des Gewindetriebs ist, mit dem Rotor gekoppelt, das heißt, dass bei Betrieb des Elektromotors die Mutter rotiert. Sie ist natürlich axial gesehen positionsfest, das heißt, dass über den Gewindetrieb die Spindel axial bewegt wird. Diese Spindel nimmt die eigentliche Stellaufgabe wahr. Zur Lagerung der Mutter ist nun erfindungsgemäß ein Planetenwälzlager vorgesehen, über das die Mutter an einem Gehäusebauteil drehgelagert ist. Dieses Planetenwälzlager dient somit einerseits der Radiallagerung, andererseits aber auch der Axiallagerung, nachdem Planetenwälzlager axial gesehen beachtlich belastet werden können, so dass die gewünschte axiale Abstützung gegeben ist. Gleichzeitig benötigt ein Planetenwälzlager wenig Bauraum, so dass insgesamt eine kompakte Lagerung der Mutter erreicht werden kann.

Das Planetenwälzlager selbst ist axial benachbart zum Stator angeordnet, mithin also möglichst nahe zum Stator positioniert, was der Kompaktheit zuträglich ist.

Zur Lagerung der Mutter über das Planetenwälzlager ist die Mutter bevorzugt selbst an ihrer Außenseite mit entsprechenden Rillen versehen, an denen die Planeten des Planetenwälzlagers laufen. Die Mutter ist folglich Teil des Planetenwälzlagers und mit den entsprechenden Laufrillen versehen. Alternativ dazu besteht natürlich die Möglichkeit, an der Mutter einen entsprechenden Innenring mit den Rillen anzuordnen.

Die Planeten wälzen des Weiteren in einem entsprechenden Außenring des Planetenwälzlagers, der bevorzugt in einer gehäuseseitigen, formkomplementären Ausnehmung aufgenommen ist.

Wie beschrieben ist der Rotor mit der Mutter verbunden, die ihrerseits über das Planetenwälzlager gehäuseseitig gelagert ist. Der Rotor selbst ist des Weiteren über ein Radiallager, insbesondere ein Wälzlager, an einem gegebenenfalls weiteren Gehäusebauteil im Inneren des Stators drehgelagert. Über dieses Radiallager ist folglich die zweite Lager- oder Abstützebene realisiert. An dieser Stelle ist ein einfaches Radiallager ausreichend, nachdem über das Planetenwälzlager eine hinreichende axiale Abstützung der gesamten Baugruppe bestehend aus Mutter und Stator gegeben ist.

Erfindungsgemäß ist der Rotor als hohles Bauteil ausgeführt und weist einen die Mutter bildenden Abschnitt auf. Das heißt, dass der Rotor und die Mutter eine einstückige Baueinheit bilden, was der Kompaktheit zuträglich ist, da keine zusätzlichen Verbindungsstellen gegeben sind.

Dabei ist gemäß einer besonders vorteilhaften Weiterbildung der Erfindung dieses hohle Bauteil derart ausgeführt, dass sich der Abschnitt, der die Mutter bildet, teilweise in den Stator erstreckt, so dass der Gewindetrieb zumindest abschnittsweise im Inneren des Stators aufgenommen ist. Da das Bauteil wie ausgeführt hohl ist, kann sein Inneres der Aufnahme nötiger Komponenten, hier des Gewindetriebs, dienen. Das heißt, dass sich der Gewindetrieb zum Teil im Statorinneren befindet, bevorzugt befindet er sich vollständig im Inneren des Stators. Dies ermöglicht eine noch weitergehende Kompaktierung, da der Abschnitt, der die Mutter bildet, lediglich ein kurzes Stück aus dem Stator ragen muss, nämlich soweit, dass das Planetenwälzlager entsprechend positioniert werden kann. Es ergibt sich also, insbesondere mit vollständig im Inneren des Stators aufgenommenem Gewindetrieb, eine äußerst kompakte Baueinheit.

Der Gewindetrieb selbst ist bevorzugt ein Planetenwälzgetriebe. Dieses umfasst in an sich bekannter Weise die entsprechende Gewinderille an der Spindel, in welcher die entsprechenden Abschnitte der Planeten des Planetenwälzgetriebes, die natürlich in entsprechenden Halteringen fixiert sind, laufen. Vorgesehen sind ferner entsprechende Außenringe, die an der Mutter festgelegt sind, also mit der Mutter rotieren, und die an den Innenseiten entsprechende Rillen aufweisen, in denen wiederum entsprechende, mit Rillenversehenen Abschnitte der Planeten abwälzen. Bei einer Drehung des Rotors und damit der Mutter kommt es zu einer Rotation der Planeten, was wiederum aufgrund der Gewinderille an der Spindel zu einer entsprechenden Axialverschiebung der Spindel führt.

Wie beschrieben können über den Linearaktuator in seiner erfindungsgemäßen, sehr kompakten Bauform entsprechende lineare Stellaufgaben abgearbeitet werden. Er kann also in beliebigen technischen Bereichen, beispielsweise im Bereich der Kraftfahrzeugtechnik und Ähnlichem, eingesetzt werden.

Besonders bevorzugt wird er als Teil einer Werkzeugaufnahme einer Werkzeugmaschine eingesetzt. Die Erfindung betrifft deshalb des Weiteren eine Werkzeugaufnahme für eine Werkzeugmaschine, umfassend eine antreibbare Werkzeugspindel mit einer im Inneren der Spindel vorgesehenen, axial bewegbaren Spanneinrichtung zum Verspannen des Werkzeugs gegen einen spindelseitig vorgesehenen Halteabschnitt, wobei die Spanneinrichtung über einen Verbindungsabschnitt lösbar mit dem Werkzeug verbindbar ist und mittels eines oder mehrerer Federelemente axial in eine Spannstellung bewegbar und gegen die Rückstellkraft des oder der Federelemente in eine Lösestellung bewegbar ist. Zur Erwirkung dieser axialen Bewegung in die Lösestellung ist erfindungsgemäß ein Linearaktuator der beschriebenen Art vorgesehen, dessen Spindel mit der Spanneinrichtung lösbar koppelbar ist.

Der Linearaktuator dient bei der erfindungsgemäßen Werkzeugaufnahme dazu, die Spanneinrichtung zu betätigen, und zwar derart, dass sie von einer Spannstellung, in die sie automatisch über das oder die mehreren Federelemente, üblicherweise Tellerfederpakete, gebracht wird, und in welcher das Werkzeug spindelseitig verspannt ist, in die Lösestellung bringbar ist. In der Spannstellung kann das Werkzeug über die Spindel bewegt werden und seine Arbeitsaufgabe durchführen. Zum Lösen des Werkzeugs wird nun über den Linearaktuator bei entsprechender Ansteuerung und Drehung des Rotors die Spindel des Gewindetriebs ein kurzes Stück axial bewegt. Es kommt im Rahmen dieser Bewegung zu einer Kopplung mit der Spanneinrichtung, die nachfolgend gegen die Rückstellkraft des oder der Tellfederpakete bewegt wird. Sie wird hierüber in die Lösestellung gedrückt, in welcher das Werkzeug aus dem Halteabschnitt entnommen werden kann. Nach Einsetzen eines neuen Werkzeugs wird der Linearaktuator in die entgegengesetzte Richtung betätigt, die Mutter dreht also in die andere Richtung, so dass die Gewindespindel wieder eingezogen wird. Die Spanneinrichtung wird entlastet, das oder die Tellerfederpakete drücken die Spanneinrichtung wieder in die Spannstellung, das Werkzeug ist wieder fixiert.

Ein Ausführungsbeispiel der Erfindung ist in der Zeichnung dargestellt und wird im Folgenden näher beschrieben. Es zeigen:
- Figur 1: eine Prinzipdarstellung eines erfindungsgemäßen Linearaktuators, und
- Figur 2: eine Prinzipdarstellung einer erfindungsgemäßen Werkzeugaufnahme.

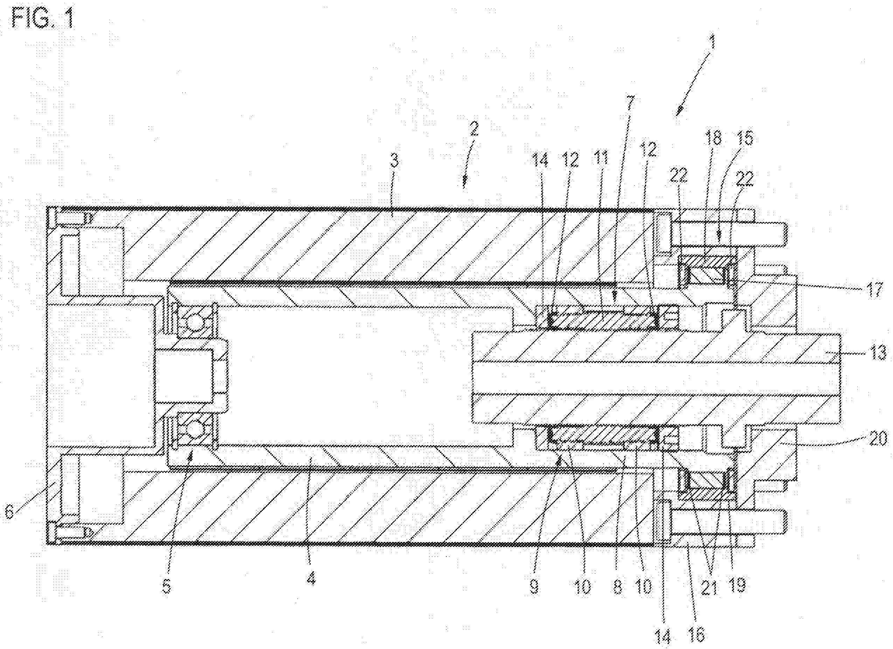

Figur 1 zeigt einen erfindungsgemäßen Linearaktuator 1, umfassend einen Elektromotor 2 mit einem Stator 3 und einem Rotor 4. Nicht näher gezeigt ist eine entsprechende Stromversorgung und Steuerungseinrichtung, die natürlich zum Betrieb vorzusehen sind. Der Rotor 4 ist als hohles Bauteil ausgeführt. Er ist über ein Radiallager 5, hier ein Kugellager, an einem Gehäusebauteil 6, das statorseitig befestigt ist, drehgelagert.

Der Rotor 4 weist einen hohlen Abschnitt 7 auf, der eine Mutter 8 bildet, die Teil eines Gewindetriebs ist, der hier als Planetenwälzgetriebe 9 ausgeführt ist. Der Abschnitt 7 ist derart ausgeführt, dass er sich zum großen Teil im Inneren des Stators 3 befindet, so dass sich, siehe Figur 1, auch der Gewindetrieb nahezu vollständig im Inneren des Stators befindet.

Das Planetenwälzgetriebe 9 umfasst im gezeigten Beispiel zwei Außenringe 10, die in der Mutter 8 drehfest aufgenommen sind und an ihren Innenseiten in an sich bekannter Weise entsprechende Rillen aufweisen. Weiterhin vorgesehen sind mehrere Planeten 11, die in entsprechenden Abstandscheiben 12 mit ihren Stirnseiten aufgenommen sind. Die Planeten 11 weisen zwei endständige Abschnitte auf, die ebenfalls mit Rillen versehen sind und mit den Rillen der Außenringe 10 kämmen. Ein mittlerer, im Durchmesser etwas stärkerer Abschnitt weist in bekannter Weise ebenfalls Rillen auf, die ihrerseits mit der Rille einer Spindel 13 kämmen, wobei die Rille der Spindel 13 eine Steigung aufweist, mithin also als Gewinde ausgeführt ist. Eine Rotation der Mutter 8 führt damit zu einer Rotation der Planeten 11, was zwangsläufig aufgrund der Gewindeausgestaltung der spindelseitigen Rille zu einer Axialbewegung der Spindel 13 führt. Im Inneren der Mutter 8 sind zwei Lagerscheiben 14 vorgesehen, an denen die Abstützscheiben 12 aufgelagert sind.

Der Abschnitt 7, also die Mutter 8, erstreckt sich ein Stück weit aus dem Stator 3 heraus. Benachbart zum Stator 3 ist die Mutter 8 über ein Planetenwälzlager 15 an einem Gehäusebauteil 16 des Linearaktuators 1 drehgelagert. Die Mutter 7 stellt dabei quasi den Innenring des Planetenwälzlagers 15 dar. Sie weist eine entsprechende Rillenausgestaltung an ihrer Außenseite auf, wobei in diesen Rillen die Planeten 17 des Planetenwälzlagers 15, die natürlich ebenfalls entsprechende Rillen aufweisen, wälzen. Ein Außenring 18 des Planetenwälzlagers 15, der ebenfalls Rillen aufweist, in denen die Planeten 17 wälzen, ist in einer formkompatiblen Ausnehmung 19 des Gehäusebauteils 16 aufgenommen und über ein weiteres Gehäuseteil 20 entsprechend fixiert. Über das Planetenwälzlager 15 ist folglich die Mutter 8 und damit der Rotor 4 selbst, der ja einstückig mit der Mutter 8 ist, an dieser Seite radial gelagert, als auch axial abgestützt, denn das Planetenwälzlager 15 dient gleichzeitig als Axiallager. Es ist in der Lage, beachtliche Axialkräfte aufzunehmen, nachdem eine Vielzahl entsprechender Planeten 17 umfangsmäßig verteilt angeordnet sind. Auch hier sind die Planeten natürlich in entsprechenden Abstandsscheiben 21 aufgenommen, die wiederum über entsprechende Haltescheiben 22 abgestützt sind.

Ersichtlich ist der erfindungsgemäße Linearaktuator äußerst kompakt aufgebaut. Denn einerseits besteht aufgrund der Ausgestaltung des Rotors 4 als hohles Bauteil mit angeformter Mutter 8 die Möglichkeit, den Gewindetrieb, hier also das Planetenwälzgetriebe 9 komplett im Stator anzuordnen. Darüber hinaus ist die Radial- und Axiallagerung des Rotors 4 und der Mutter 8 über lediglich zwei Lager realisiert, nämlich einerseits über das Radiallager 5 und andererseits über das Planetenwälzlager 15. Da auch das Radiallager 5 im Inneren des Stators und das Planetenwälzlager 15 unmittelbar benachbart zum Stator angeordnet ist, ergibt sich insgesamt eine sehr kompakte Bauform.

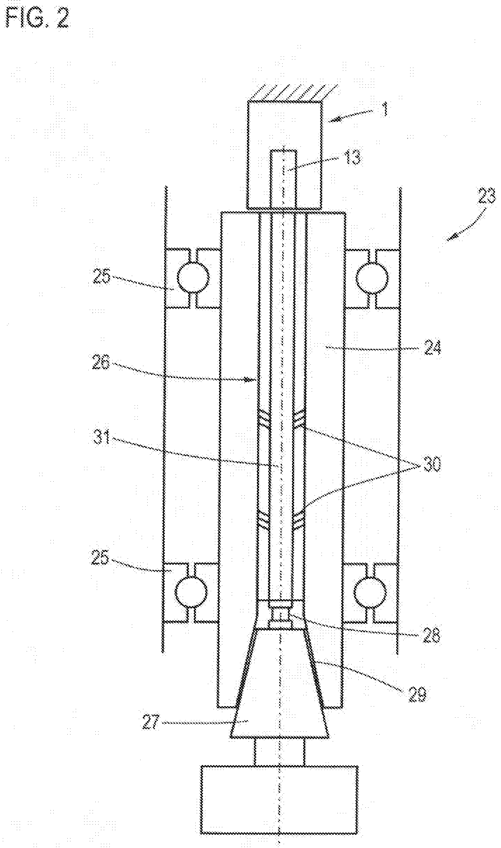

Figur 2 zeigt in Form einer Prinzipdarstellung ein Anwendungsbeispiel des erfindungsgemäßen Linearaktuators 1 als Teil einer erfindungsgemäßen Werkzeugaufnahme 23. Diese umfasst eine Werkzeugspindel 24, die über einen nicht näher gezeigten Antrieb drehbar ist, sie ist über entsprechende Lager 25 drehgelagert.

Im Inneren der Spindel 24 ist eine Spanneinrichtung 26 aufgenommen, die zum lösbaren Haltern und Verspannen eines Werkzeugs 27 dient. Diese Spanneinrichtung 26 umfasst einen entsprechenden Verbindungsabschnitt 28, also ein geeignetes Spannelement, an dem das Werkzeug 27 lösbar befestigt werden kann. Mittels der Spanneinrichtung 26 ist es möglich, das Werkzeug 27 gegen einen entsprechenden Halteabschnitt 29 der Spindel 24 zu spannen und zu fixieren. Im Falle einer Spindelrotation dreht folglich auch das Werkzeug 27.

Hierzu weist die Spanneinrichtung 26 mehrere Federelemente 30 auf, hier in Form geeigneter Tellerfederpakete. Diese bewegen die Spanneinrichtung 26, die eine entsprechende, mit den Federelementen 30 verbundene Stange 31 aufweist, an der der Verbindungsabschnitt 28 vorgesehen ist, in eine Spannstellung, in welcher der Verbindungsabschnitt 28 nebst Werkzeug 27 gegen den Halteabschnitt 29 der Spindel 24 gezogen wird.

Um nun die Spanneinrichtung 26 zum Lösen und damit zum Wechsel des Werkzeugs 27 zu betätigen, ist der erfindungsgemäße Linearaktuator 1 vorgesehen. Von diesem ist exemplarisch die Spindel 13 gezeigt. Diese ist in der in Figur 2 gezeigten Spannstellung nicht mit der Spanneinrichtung 26, hier der Stange 31 gekoppelt. Denn in der Spannstellung rotiert die Spindel 24.

Soll nun jedoch die Spanneinrichtung 26 gelöst werden, so wird der Linearaktuator 1 angesteuert, so dass der Rotor dreht. Infolge der entsprechenden Rotation der Mutter wird die Spindel 13 axial bewegt und ausgefahren. Sie drückt von oben gegen die Stange 31, die entgegen der Rückstellkraft der Federelemente 30 quasi aus der Spindel 24 herausgedrückt wird. Dies führt dazu, dass das vormals gegen den Halteabschnitt 29 verspannte Werkzeug 27 aus seiner Anlage am Halteabschnitt 29 bewegt wird. Es ist gelöst und kann ausgetauscht werden. Nach Ansetzen eines neuen Werkzeugs wird zum Verspannen desselben der Linearaktuator 1 wieder angesteuert, so dass der Rotor 4 und mit ihm die Mutter 8 in die entgegengesetzte Richtung dreht. Dies führt dazu, dass die Spindel 13 wieder eingezogen wird, die Stange 31 wird entlastet, die Federelemente 30 bewegen die Stange 31 und mit ihr den Verbindungsabschnitt 28 nebst Werkzeug 27 wieder in die Spannstellung, in welcher das Werkzeug 27 fest gegen den Halteabschnitt 29 gespannt ist.

### Bezugszahl nliste

- 1: Linearaktuator
- 2: Elektromotor
- 3: Stator
- 4: Rotor
- 5: Radiallager
- 6: Gehäusebauteil
- 7: Abschnitt
- 8: Mutter
- 9: Planetenwälzgetriebe
- 10: Außenringe
- 11: Planeten
- 12: Abstandsscheiben
- 13: Spindel
- 14: Lagerscheiben
- 15: Planetenwälzlager
- 16: Gehäusebauteil
- 17: Planeten
- 18: Außenring
- 19: Ausnehmung
- 20: Gehäuseteil
- 21: Abstandsscheiben
- 22: Haltescheiben
- 23: Werkzeugaufnahme
- 24: Werkzeugspindel
- 25: Lager
- 26: Spanneinrichtung
- 27: Werkzeug
- 28: Verbindungsabschnitt
- 29: Halteabschnitt
- 30: Federelement
- 31: Stange

## Patentansprüche

1. Linearaktuator, umfassend einen Elektromotor (2) mit einem Stator (3) und einem Rotor (4) sowie ein Planetenwälzgetriebe (9) mit einer Spindel (13) und einer über Planeten (11) auf der Spindel (13) geführten Mutter (8), die mit dem Rotor (4) gekoppelt ist, wobei die Planeten (11) sowohl mit der Mutter (8) als auch mit der Spindel (13) kämmen, wobei die Mutter (8) an einem Gehäusebauteil (16) über ein Planetenwälzlager (15) sowohl axial als auch radial gelagert ist, dessen Planeten (17) zwischen einem Außenring (18) und der Mutter (8) angeordnet sind und eine Vielzahl von axial hintereinander angeordneten Rillen aufweisen, wobei der Mutter (8) zugeordnete Rillen sowie an dem Außenring (18) angeordnete Rillen vorgesehen sind, an denen die Planeten (17) wälzen, **dadurch gekennzeichnet, dass** der Rotor (4) als hohles Bauteil ausgeführt ist und einen die Mutter (8) bildenden Abschnitt (7) aufweist.

2. Linearaktuator nach Anspruch 1, **dadurch gekennzeichnet, dass** das Planetenwälzlager (15) axial benachbart zum Stator (3) angeordnet ist.

3. Linearaktuator nach Anspruch 1 oder 2, **dadurch gekennzeichnet, dass** an der Außenseite der Mutter (8) selbst Rillen vorgesehen sind, in denen die Planeten (17) des Planetenwälzlager (15) laufen.

4. Linearaktuator nach einem der vorangehenden Ansprüche, **dadurch gekennzeichnet, dass** ein Außenring (18) des Planetenwälzlagers (15) in einer gehäuseseitigen, formkomplementären Ausnehmung (19) aufgenommen ist.

5. Linearaktuator nach einem der vorangehenden Ansprüche, **dadurch gekennzeichnet, dass** der Rotor (4) über ein Radiallager (5), insbesondere ein Wälzlager, an einem weiteren Gehäusebauteil (6) im Inneren des Stators (3) drehgelagert ist.

6. Linearaktuator nach Anspruch 1, **dadurch gekennzeichnet, dass** sich der Abschnitt (7) teilweise in den Stator (3) erstreckt, so dass der Gewindetrieb (9) zumindest abschnittsweise im Inneren des Stators (3) aufgenommen ist.

7. Linearaktuator nach Anspruch 6, **dadurch gekennzeichnet, dass** der Gewindetrieb (9) vollständig im Innern des Stators (3) aufgenommen ist.

8. Werkzeugaufnahme für eine Werkzeugmaschine, umfassend eine antreibbare Werkzeugspindel (24) mit einer im Inneren der Werkzeugspindel (24) vorgesehenen, axial bewegbare Spanneinrichtung (26) zum Verspannen des Werkzeugs (27) gegen einen spindelseitig vorgesehenen Halteabschnitt (29), wobei die Spanneinrichtung (26) über einen Verbindungsabschnitt (28) lösbar mit dem Werkzeug (27) verbindbar ist und mittels eines oder mehrere Federelemente (30) axial in eine Spanstellung bewegbar und gegen die Rückstellkraft des oder der Federelemente (30) in eine Lösestellung bewegbar ist, wobei zur axialen Bewegung in die Lösestellung ein Linearaktuator (1) nach einem der vorangehenden Ansprüche vorgesehen ist, dessen Spindel (13) mit der Spanneinrichtung (26) lösbar koppelbar ist.

## Claims

1. Linear actuator, comprising an electric motor (2) with a stator (3) and with a rotor (4) and comprising a rolling-contact planetary transmission (9) with a spindle (13) and with a nut (8) which is guided on the spindle (13) by means of planets (11) and which is coupled to the rotor (4), wherein the planets (11) mesh both with the nut (8) and with the spindle (13), wherein the nut (8) is mounted both axially and radially on a housing component (16) by means of a rolling-contact planetary bearing (15), the planets (17) of which are arranged between an outer ring (18) and the nut (8) and have a multiplicity of grooves arranged axially one behind the other, wherein grooves assigned to the nut (8) and grooves arranged on the outer ring (18) are provided, on which grooves the planets (17) roll, **characterized in that** the rotor (4) is designed as a hollow component and has a section (7) which forms the nut (8) .

2. Linear actuator according to Claim 1, **characterized in that** the rolling-contact planetary bearing (15) is arranged axially adjacent to the stator (3).

3. Linear actuator according to Claim 1 or 2, **characterized in that**, on the outer side of the nut (8) itself, there are provided grooves in which the planets (17) of the rolling-contact planetary bearing (15) run.

4. Linear actuator according to one of the preceding claims, **characterized in that** an outer ring (18) of the rolling-contact planetary bearing (15) is accommodated in a recess (19) of complementary shape in the housing.

5. Linear actuator according to one of the preceding claims, **characterized in that** the rotor (4) is, by means of a radial bearing (5), in particular a rolling-contact bearing, mounted rotatably on a further housing component (6) in the interior of the stator (3).

6. Linear actuator according to Claim 1, **characterized in that** the section (7) extends partially into the stator (3), such that the screw drive (9) is accommodated at least in sections in the interior of the stator (3).

7. Linear actuator according to Claim 6, **characterized in that** the screw drive (9) is accommodated entirely in the interior of the stator (3).

8. Tool receptacle for a machine tool, comprising a driveable tool spindle (24) with an axially movable clamping device (26), which is provided in the interior of the tool spindle (24), for clamping the tool (27) against a holding section (29) provided on the spindle, wherein the clamping device (26) is releasably connectable by means of a connecting section (28) to the tool (27) and is, by means of one or more spring elements (30), movable axially into a clamping position and movable counter to the restoring force of the one or more spring elements (30) into a release position, wherein, for the axial movement into the release position, a linear actuator (1) according to one of the preceding claims is provided, the spindle (13) of which is releasably couplable to the clamping device (26).

## Revendications

1. Actionneur linéaire, comprenant un moteur électrique (2) avec un stator (3) et un rotor (4) ainsi qu'une transmission à rouleaux planétaires (9) avec une broche (13) et un écrou (8) guidé sur la broche (13) par le biais de satellites (11), lequel écrou est accouplé au rotor (4), les satellites (11) s'engrenant la fois avec l'écrou (8) et avec la broche (13), l'écrou (8) étant supporté axialement ainsi que radialement sur un composant du boîtier (16) par le biais d'un palier à roulement planétaire (15), dont les satellites (17) sont disposés entre une bague extérieure (18) et l'écrou (8) et présentent une pluralité de rainures disposées axialement les unes derrière les autres, des rainures associées à l'écrou (8) ainsi que des rainures disposées sur la bague extérieure (18) étant prévues, sur lesquelles roulent les satellites (17), **caractérisé en ce que** le rotor (4) est réalisé sous forme de composant creux et présente une portion (7) formant l'écrou (8) .

2. Actionneur linéaire selon la revendication 1, **caractérisé en ce que** le palier à roulement planétaire (15) est disposé axialement à côté du stator (3).

3. Actionneur linéaire selon la revendication 1 ou 2, **caractérisé en ce que** des rainures sont prévues sur le côté extérieur de l'écrou (8) lui-même, dans lesquelles roulent les satellites (17) du palier à roulement planétaire (15).

4. Actionneur linéaire selon l'une quelconque des revendications précédentes, **caractérisé en ce qu'**une bague extérieure (18) du palier à roulement planétaire (15) est reçue dans un évidement (19) de forme complémentaire, du côté du boîtier.

5. Actionneur linéaire selon l'une quelconque des revendications précédentes, **caractérisé en ce que** le rotor (4) est supporté à rotation par le biais d'un palier radial (5), en particulier d'un palier à roulement, sur un autre composant du boîtier (6) à l'intérieur du stator (3).

6. Actionneur linéaire selon la revendication 1, **caractérisé en ce que** la portion (7) s'étend en partie dans le stator (3) de telle sorte que l'entraînement fileté (9) soit reçu au moins en partie à l'intérieur du stator (3).

7. Actionneur linéaire selon la revendication 6, **caractérisé en ce que** l'entraînement fileté (9) est complètement reçu à l'intérieur du stator (3).

8. Logement d'outil pour une machine-outil, comprenant une broche d'outil pouvant être entraînée (24) avec un dispositif de serrage déplaçable axialement (26), prévu à l'intérieur de la broche d'outil (24), pour serrer l'outil (27) contre une portion de retenue (29) prévue du côté de la broche, le dispositif de serrage (26) pouvant être connecté de manière desserrable à l'outil (27) par le biais d'une portion de liaison (28) et pouvant être déplacé au moyen d'un ou plusieurs éléments de ressort (30) axialement dans une position de serrage et pouvant être déplacé à l'encontre de la force de rappel du ou des éléments de ressort (30) dans une position de desserrage, un actionneur linéaire (1) selon l'une quelconque des revendications précédentes étant prévu pour le déplacement axial dans la position de desserrage, dont la broche (13) peut être accouplée de manière desserrable au dispositif de serrage (26).
